# EUROPEAN PATENT SPECIFICATION

(11) **EP 0 865 318 B1**
(45) Date of publication and mention of the grant of the patent: **30.01.2002**
(21) Application number: 96934849.9
(22) Date of filing: 23.10.1996
(51) Int. Cl.: B02C 2/04

(54) **AXIAL BEARING FOR CRUSHER, AND CRUSHER**
AXIALLAGER EINER ZERKLEINERUNGSVORRICHTUNG, SOWIE ZERKLEINERUNGSVORRICHTUNG
PALIER AXIAL POUR CONCASSEUR, ET CONCASSEUR

(30) Priority: 25.10.1995 FI 955089
(43) Date of publication of application: 23.09.1998
(73) Proprietor: Metso Minerals (Tampere) Oy, 33101 Tampere (FI)
(72) Inventor: RUOKONEN, Markku, FIN-37500 Lempäälä (FI); AHO, Olli, FIN-33720 Tampere (FI)
(74) Representative: Langenskiöld, Tord Karl Walter
(86) International application number: FI9600562
(87) International publication number: WO9715396

(56) References cited:
- WO-A-95/20435
- DE-C- 2 914 766

## Description

### TECHNICAL FIELD

The present invention concerns gyratory crushers. More particularly the invention concerns an axial thrust bearing of a gyratory crusher.

### BACKGROUND ART

Gyratory crushers comprise a vertical eccentric shaft with an inclined inner hole therein. A main shaft, to which a supporting cone is attached, and which is supported to the frame at its upper part by means of an upper supporting bearing, is mounted in the hole. The supporting cone is surrounded on its sides by the frame of the crusher, an element acting as a wearing part called outer crushing head being attached to the frame. An element acting as a wearing part called inner crushing head is attached to the supporting cone. The inner and outer crushing heads, together, form a crushing chamber, where the feed material is crushed. When the eccentric shaft is rotated, the main shaft and, together with it, the supporting cone get to an oscillating movement, whereby the gap between the inner and outer head at each point varies during the working cycle. The smallest gap during the working cycle is called the setting of the crusher, and the difference between the minimum and maximum gap is called the stroke of the crusher.

Through the magnitude of the setting and the stroke of the crusher, i.a. the particle size distribution of the produced crushed material and the production capacity can be influenced.

Presently, a gyratory crusher can be adjusted by means of a hydraulic system, so that the main shaft can be moved vertically in relation to the frame. This makes it possible to change the setting so that the size of the final product corresponds to the desired one and/or to maintain the same setting when the crushing heads wear.

Below the main shaft, there is a thrust bearing combination. At the lower end of the main shaft, there is a bearing plate made of bearing metal, said bearing plate having usually a convex lower surface. A corresponding plate made of bearing metal, said plate having a convex upper surface, is attached on top of an adjusting piston, located below the main shaft, or, in some embodiments, onto the bottom of a cup-formed plunger piston acting as an adjusting piston. Lubricating grooves have been machined onto the bearing plates for lubrication oil. Between the bearing plates, there is usually an intermediate plate made of steel, following the surfaces of the bearing plates and having thus in general two concave surfaces. The bearing metal is an alloy softer than steel, e.g. bronze.

Either one of the bearing plates can also have a plane surface, whereby the corresponding surface of the intermediate plate is naturally also a plane surface.

A disadvantage of the thrust bearing construction of prior art is that the different coefficients of thermal expansion of the metals change the geometry of the bearing surfaces in different ways. This causes local increase of surface pressure in the bearings. This, in turn, causes extra heat, whereby the surfaces change their shape even more. Thereby the local surface pressure is further increased, and finally the bearing may be destroyed.

A disadvantage of the prior art is also the fact, among others, that the bevelled edges of the lubricant grooves machined into the bearing metal softer than steel, wear in use. This can finally lead to an insufficient formation of lubricant film between the bearing surfaces, which also can cause the bearing to be destroyed.

A further disadvantage of the prior art is that a lot of bearing metal is needed. The bearing metal is usually material more expensive than steel, whereby one disadvantage of the bearing based on prior art is its high cost. Additionally, in several embodiments the most useful bearing material is lead bronze, so that the use of a bearing based on the prior art causes work hygienic and environmental problems because of the high consumption of toxic lead.

Patent publication SE 138 423 discloses an axial bearing of a crusher, in one embodiment of which the intermediate plate is entirely of bronze, and the opposite surfaces above and below it are made of steel. In that case, too, there is the problem of the different coefficients of thermal expansion of the metals, and the different deformations of the curved surfaces. Another embodiment described in the publication shows a bearing, where the bearing material used for the intermediate plate is laminated textile impregnated with phenolic resin. The centre part of the intermediate plate is entirely of this impregnated textile material, surrounded by an enforcing ring of metal.

### DISCLOSURE OF THE INVENTION

### General description

What has now been invented, is an axial thrust bearing combination in accordance with claim 1, and a gyratory crusher in accordance with claim 7. Some preferred embodiments of the invention are stated in other claims.

Most essential to the invention is that at least one surface of the intermediate plate is plated with a bearing metal layer, and that the opposite surface against this bearing metal layer is made of a harder material than this bearing material. Most preferably, the bearing metal plating is attached by exploding to the surface of the steel heart of the intermediate plate.

Explosive welding for connecting materials with each other is known in the art. Plating with explosion method means that the piece to be plated is placed onto a base, and a plating plate is placed above it, at a distance from the part to be plated. The explosive is ignited and the plating plate hits to the surface of the part to be plated. The surfaces are totally welded to each other.

The construction of the massive bearing made of bearing metal has been changed so that the frame of the intermediate plate is manufactured of steel or a material having corresponding strength characteristics, and a bearing metal plate is joined therewith at least on one side, but preferably on both sides. The convex, concave or plane bearing plate on the upper and lower sides, provided with lubrication grooves, is correspondingly manufactured of steel or a material having corresponding strength characteristics.

A separate plate below can also be replaced by the upper surface of the piston with lubrication grooves, or in some embodiments with the upper surface of a cup-formed plunger piston provided with lubrication grooves.

The construction in accordance with the present invention has the advantage that the different thermal expansions of the steel and the bearing metal can be better controlled, when only a thin bearing metal plating is used on the intermediate plate made of steel, instead of massive bearing metal plates. A sufficient thickness of the plating is, depending on the type of the crusher and the crushing process, from ca. 10 mm even to 1 mm. Additionally, the wearing of the lubrication grooves on the surface of the steel or a material having corresponding strength characteristics is minor. Further, the use of bearing metals is less, and thereby the production costs are decreased.

The lower bearing plate can be eliminated, and thus the construction is more simple.

One further advantage is gained when the invention is applied to a crusher, where the massive adjusting piston is replaced by a thin-bottomed, cup-formed adjusting piston, onto the bottom of which the main shaft is supported via an axial bearing. When in this kind of a crusher, the thickness of the bearing surface is added to the thickness of the bottom of the piston, the bottom will be stiffer and more robust, however, without increasing the total height of the crusher. It is, in addition, easier to arrange the safety valve of the hydraulic adjustment system to the thicker bottom of the adjusting piston. Thus, in an overload situation, the adjustment pressure oil can be led from below the adjusting piston to the axial and radial bearings of the crusher, thus providing additional lubrication or cooling for the bearings, especially required in the overload situation.

### Description of drawings

The enclosed drawings form a part of the description of the invention.

Figure 1 illustrates a gyratory crusher.

Figure 2 illustrates one embodiment of a thrust bearing combination in accordance with the present invention.

### Example

A gyratory crusher has a spindle shaft comprising a main shaft 1 and a conic crushing head 3, mounted onto a supporting cone 2. An inclined hole of an eccentric shaft 4 causes during the working cycle a forced oscillating movement narrowing and widening the crushing gap 5 between the crushing heads making the stones to crush between them. The smallest value of the crushing gap 5 during a working cycle is called the setting of the gyratory crusher. The setting is changed by means of a hydraulic adjusting device by leading pressure medium to a space 7 below a piston 6, whereby the spindle shaft raises upwards thus decreasing the setting. Correspondingly, by removing pressure medium from the space 7, the spindle shaft 1 descends downwards and the setting is increased.

The lower end of the main shaft is leaning against the upper surface of the adjusting piston, or in some embodiments, against the upper surface of the cup-formed bottom of the adjusting piston via a thrust bearing 9. Between the inner surface of the piston 6 and the outer surface of the eccentric shaft 4, there is a radial bearing 8. Between the inner surface of the eccentric shaft and the spindle shaft 1, there is a radial bearing 10'. The crusher is surrounded by a frame 11' .

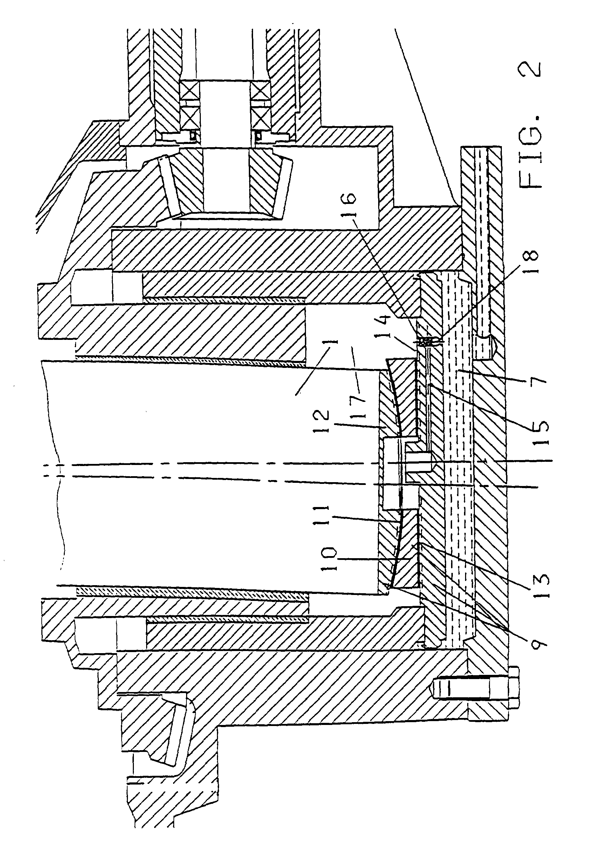

The thrust bearing combination 9 makes it possible to accomplish a forced oscillating movement of the main shaft of the gyratory crusher. The thrust bearing combination 9 of figure 2 comprises an intermediate plate 10, the upper surface 11 of which is a part of a concave spherical surface, against which rests an upper bearing 12 correspondingly formed as a part of a convex spherical surface and mounted at the lower end of the main shaft. The plane lower surface 13 of the intermediate plate 10 of the thrust bearing combination is supported by the corresponding plane bearing surface 14 of the upper surface of the piston bottom.

Of the surfaces 11 and 13 of the intermediate plate, at least one is plated with a bearing metal plating. The upper bearing 12 is made of steel or a material with corresponding strength characteristics, as well as the bearing surface 14 of the piston bottom.

In the piston, there is a channel 15, the lower end of which opens to the pressure medium chamber 7. The other end of the channel opens to an opening in the middle of the intermediate plate 10. At the lower end of the channel 15, there is a safety valve 18, which opens only when the pressure in the chamber 7 exceeds a given value. When the crushing pressure exceeds the given value, the safety valve 18 relieves the pressure from the chamber 7 to the axial bearing 9 of the main shaft, thus providing for it the required additional lubrication.

Correspondingly, the additional lubrication can also be led to the radial bearing of the crusher, via the other branch 16 of the channel 15 and a lubricant chamber 17.

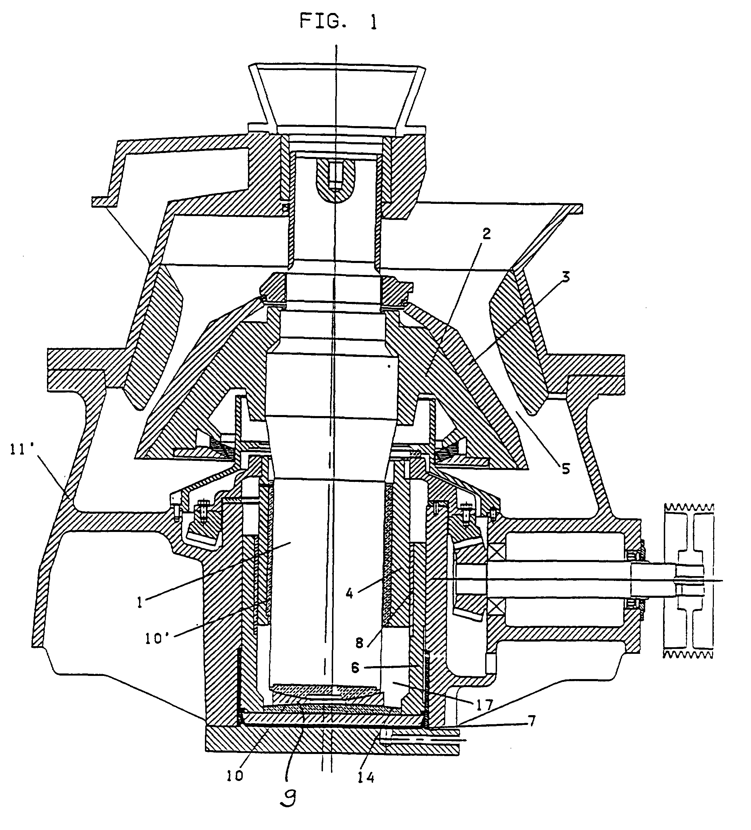

In the embodiment of figure 1, the lower bearing surface 14 is on a separate part attached to the bottom of the piston. The bearing surface 14 has a convex form, whereby the lower surface of the intermediate plate 10 against it has correspondingly a concave form.

The convex bearing surface 12 attached to the lower end of the main shaft, made either of steel or a material with corresponding strength characteristics, can also be manufactured as one piece with the main shaft.

The other surface of the intermediate plate can also be left unplated, and it can be provided with oil grooves, and the corresponding surface of the bearing part can be plated with bearing metal.

The bearing metal forms only a thin layer on the core part of the intermediate plate. The volume of the core part is at least 50 %, preferably at least 70 %, eventually even at least 99 % of the total volume of the intermediate plate. The bigger the share of the core part, the better the strength and the loading capacity of the intermediate plate, and the better the thermal expansion of the intermediate plate corresponds to the thermal expansion of the surfaces against it. Most preferably the core part extends to the edge of the opening in the intermediate plate.

## Claims

1. An axial thrust bearing combination (9) of a main shaft of a gyratory crusher, said thrust bearing combination comprising an intermediate plate (10), the upper surface (11) of which is a part of a convex or concave spherical surface or a plane surface, opposed by a lower surface of the main shaft (1) or of a plate (12) attached to the main shaft, said lower surface being correspondingly formed as a convex or concave part of a spherical surface or as a plane surface, and the lower surface (13) of which is opposed by a bearing surface (14) below the intermediate plate, whereby at least one surface (11, 13) of the intermediate plate is made of a bearing material softer than steel, and the opposite surface (12, 14) against it is a steel surface or a surface having the corresponding strength characteristics, **characterized in that** the core part of the intermediate plate (10) comprising at least 50 %, preferably at least 70 %, even at least 99 % of the volume of the intermediate plate (10) is made of steel or of a material having the corresponding strength characteristics, and at least one surface of it is plated with a layer of bearing material (11, 13).

2. A thrust bearing combination according to claim 1, **characterized in that** the bearing material (11, 13) of the intermediate plate (10) is made of a bearing metal.

3. A thrust bearing combination in accordance with claim 2, **characterized in that** the bearing metal (11, 13) of the intermediate plate (10) is attached to the core part by exploding.

4. A thrust bearing combination according to any of the claims from 1 to 3, in which the opposite surfaces (12, 14) against the intermediate plate (10) are steel surfaces or surfaces made of a material having the corresponding strength, **characterized in that** both the upper and lower surface of the intermediate plate (10) are plated with a layer of bearing material (11, 13).

5. A thrust bearing combination according to any of the claims from 1 to 4, **characterized in that** the lower surface (13) of the intermediate plate (10) opposes directly to the upper surface of the adjusting piston of the crusher below the main shaft (1), or to the upper surface (14) of the bottom of a cup-formed plunger piston (6) surrounding the lower end of the main shaft.

6. A thrust bearing combination according to any of the claims from 1 to 5, in which the bearing surfaces have grooves for lubricant, **characterized in that** the lubricant grooves are made onto steel surfaces or onto bearing surfaces (12, 14) with a corresponding strength, and that the bearing material surfaces (11, 13) are smooth.

7. A gyratory crusher, comprising
a frame (11' ),
in the frame an eccentric shaft (4), rotatable around a vertical axis, with a vertical inclined hole in it,
a main shaft (1) supported by bearings in the hole of the eccentric shaft and having an upper end extending above the eccentric shaft, a supporting cone (2) being attached to said upper end, and a crushing head (3) being attached to said supporting cone, and
below the main shaft an axial thrust bearing combination (9) comprising an intermediate plate (10), the upper surface (11) of which is a part of a concave or convex spherical surface or a plane surface, opposed by the lower end (12) of the main shaft formed correspondingly as a part of a convex or concave spherical surface or as a plane surface, whereby at least one of the surfaces (11, 13) of the intermediate plate is made of a bearing material softer than steel, and the opposite surface (12, 14) against it is a steel surface or a surface made of a material with corresponding strength characteristics,
**characterized in that** a core part comprising at least 50 %, preferably at least 70 %, even at least 99 % of the volume of the intermediate plate (10) is of steel or of a material with a corresponding strength, at least one of the two surfaces of it being plated with a layer of bearing material (11, 13).

8. A gyratory crusher in accordance with claim 7, **characterized in that** the bearing material (11, 13) of the intermediate plate (10) is made of bearing metal.

9. A gyratory crusher in accordance with claim 8, **characterized in that** the bearing metal (11, 13) of the intermediate plate (10) is attached to the surface of the core part by exploding.

10. A gyratory crusher in accordance with any of the claims from 7 to 9, wherein the opposite surfaces (12, 14) against the intermediate plate (10) are steel surfaces or surfaces made of material having a corresponding strength, **characterized in that** both the upper and lower surface of the intermediate plate (10) is plated with a layer of bearing material (11, 13).

11. A gyratory crusher in accordance with any of the claims from 7 to 10, **characterized in that** the lower surface (13) of the intermediate plate (10) opposes directly to the upper surface of the adjusting piston of the crusher below the main shaft (1), or to the upper surface (14) of the bottom of the cup formed plunger piston (6) acting as adjusting piston and surrounding the lower end of the main shaft.

12. A gyratory crusher in accordance with any of the claims from 7 to 11, **characterized in that** in the piston (6) there is a channel (15, 16) provided with a safety valve (18), one end of said channel joining with a pressure medium space (7) of the hydraulic system moving the adjusting piston (6), for leading lubricant to a lubricant space (17), when the pressure of the pressure medium space (7) exceeds a certain value.

13. A gyratory crusher in accordance with any of the claims from 7 to 12, **characterized in that** in the piston (6) there is a channel (15, 16) equipped with a safety valve (18), one end of said channel joining with a pressure medium space (7) of the hydraulic system moving the adjusting piston (6) for leading lubricant to the bearing surface (14) and between the upper surface (11) of the intermediate plate (10) and its counter surface (12), when the pressure of the pressure medium space (7) exceeds a certain value.

14. A gyratory crusher in accordance with any of the claims from 7 to 13, having grooves for lubricant, **characterized in that** the lubricant grooves are made into the steel surfaces or into the bearing surfaces (12, 14) having a corresponding strength, and the bearing material surfaces (11, 13) are smooth.

## Patentansprüche

1. Axialdrucklager-Kombination (9) einer Hauptwelle eines Kegelbrechers, wobei die Drucklager-Kombination eine Zwischenplatte (10) aufweist, deren obere Fläche (11) ein Teil einer konvexen oder konkaven kugelförmigen Fläche oder einer ebenen Fläche ist, dem eine untere Fläche der Hauptwelle (1) oder einer Platte (12), die an der Hauptwelle befestigt ist, gegenüberliegt, wobei die untere Fläche entsprechend als ein Teil einer konvexen oder konkaven kugelförmigen Fläche oder als eine ebene Fläche ausgebildet ist, und deren unteren Fläche (13) eine Lagerauflagefläche (14) unterhalb der Zwischenplatte gegenüberliegt, wobei wenigstens eine Fläche (11, 13) der Zwischenplatte aus einem Lagermaterial, weicher als Stahl hergestellt ist, und wobei die gegenüberliegende Fläche (12, 14), die an ihr anliegt, eine Stahlfläche oder eine Fläche mit entsprechenden Festigkeitseigenschaften ist,
**dadurch gekennzeichnet, daß**
der Kernteil der Zwischenplatte (10), der wenigstens 50 %, vorzugsweise wenigstens 70 %, oder auch wenigstens 99 % des Volumens der Zwischenplatte (10) aufweist, aus Stahl oder aus einem Material mit entsprechenden Festigkeitseigenschaften hergestellt ist, und wenigstens eine Fläche von ihm mit einer Schicht aus Lagermaterial (11, 13) überzogen ist.

2. Axialdrucklager-Kombination nach Anspruch 1,
**dadurch gekennzeichnet, daß**
das Lagermaterial (11, 13) der Zwischenplatte (10) ein Lagermetall ist.

3. Axialdrucklager-Kombination nach Anspruch 2,
**dadurch gekennzeichnet, daß**
das Lagermetall (11, 13) der Zwischenplatte (10) mittels Explosion am Kernteil befestigt ist.

4. Axialdrucklager-Kombination nach einen der vorhergehenden Ansprüche 1 bis 3, bei der die der Zwischenplatte (10) gegenüberliegenden Flächen (12, 14) Stahlflächen oder Flächen sind, die aus einem Material mit der entsprechenden Festigkeit hergestellt sind,
**dadurch gekennzeichnet, daß**
sowohl die obere als auch die untere Fläche der Zwischenplatte (10) mit einer Schicht aus Lagermaterial (11, 13) überzogen sind.

5. Axialdrucklager-Kombination nach einen der Ansprüche 1 bis 4,
**dadurch gekennzeichnet, daß**
die untere Fläche (13) der Zwischenplatte (10) direkt an der unteren Fläche des Einstellkolbens des Brechers unterhalb der Hauptwelle (1) oder an der oberen Fläche (14) des Bodens eines becherförmigen Plunger-Kolbens (6), der das untere Ende der Hauptwelle umgibt, anliegt.

6. Axialdrucklager-Kombination nach einen der Ansprüche 1 bis 5, bei der die Lagerauflageflächen Rillen für Schmiermittel haben,
**dadurch gekennzeichnet, daß**
die Schmiermittelrillen an den Stahlflächen oder an den Lagerauflageflächen (12, 14) mit einer entsprechenden Festigkeit hergestellt sind, und daß die Lagermaterialflächen (11, 13) glatt sind.

7. Kegelbrecher, aufweisend
einen Rahmen (11'),
in dem Rahmen eine exzentrische Welle (4), die sich um eine vertikale Achse drehen kann, mit einer vertikalen, geneigten Bohrung,
eine Hauptwelle, die mittels Lagern in der Bohrung der exzentrischen Welle gehalten ist und ein oberes Ende hat, das sich über der exzentrischen Welle erstreckt, wobei ein Haltekeil (2) an dem oberen Ende befestigt ist, und wobei ein Brecherkopf (3) an dem Haltekeil befestigt ist, und
unterhalb der Hauptwelle eine Axialdrucklager-Kombination (9), aufweisend eine Zwischenplatte (10), deren obere Fläche (11) ein Teil einer konkaven oder konvexen kugelförmigen Fläche oder einer ebenen Fläche ist, an dem das untere Ende (12) der Hauptwelle, das entsprechend als Teil einer konvexen oder konkaven kugelförmigen Fläche oder als eine ebene Fläche ausgebildet ist, anliegt, wobei wenigstens eine der Flächen (11, 13) der Zwischenplatte aus einem Lagermaterial weicher als Stahl hergestellt sind und die gegenüberliegende Fläche (12, 14), die an ihr anliegt, eine Stahlfläche oder eine Fläche ist, die aus einem Material mit entsprechenden Festigkeitseigenschaften ist,
**dadurch gekennzeichnet, daß**
ein Kernteil, der wenigstens 50 %, vorzugsweise wenigstens 70 %, oder sogar wenigstens 99 % des Volumens der Zwischenplatte (10) aufweist, aus Stahl oder einem Material mit einer entsprechenden Festigkeit ist, wobei wenigstens eine der beiden Flächen mit einer Schicht aus Lagermaterial (11, 13) überzogen ist.

8. Kegelbrecher nach Anspruch 7,
**dadurch gekennzeichnet, daß**
das Lagermaterial (11, 13) der Zwischenplatte (10) aus Lagermetall hergestellt ist.

9. Kegelbrecher nach Anspruch 8,
**dadurch gekennzeichnet, daß**
das Lagermetall (11, 13) der Zwischenplatte (10) an der Fläche des Kernteils mittels Explosion befestigt ist.

10. Kegelbrecher nach einen der Ansprüche 7 bis 9, bei dem die gegenüberliegenden Flächen (12, 14), die an der Zwischenplatte (10) anliegen, Stahlflächen oder Flächen sind, die aus einem Material mit einer entsprechenden Festigkeit hergestellt sind,
**dadurch gekennzeichnet, daß**
sowohl die obere als auch die untere Fläche der Zwischenplatte (10) mit einer Schicht aus Lagermaterial (11, 13) überzogen sind.

11. Kegelbrecher nach einen der Ansprüche 7 bis 10,
**dadurch gekennzeichnet, daß**
die untere Fläche (13) der Zwischenplatte (10) direkt der oberen Fläche des Einstellkolbens der Zerkleinerungsmaschine unterhalb der Hauptwelle (1) oder der oberen Fläche (14) des Bodens des becherförmigen Plunger-Kolbens (6), der als Einstellkolben dient und das untere Ende der Hauptwelle umgibt, gegenüberliegt.

12. Kegelbrecher nach einen der Ansprüche 7 bis 11,
**dadurch gekennzeichnet, daß**
im Kolben (6) ein Kanal (15, 16) angeordnet ist, der mit einem Sicherheitsventil (18) versehen ist, wobei ein Ende des Kanals mit einer Druckmittelkammer (7) des hydraulischen Systems verbunden ist, das den Einstellkolben (6) bewegt, um Schmiermittel in eine Schmiermittelkammer (17) zu leiten, wenn der Druck in der Druckmittelkammer (7) einen bestimmten Wert überschreitet.

13. Kegelbrecher nach einen der Ansprüche 7 bis 12,
**dadurch gekennzeichnet, daß**
im Kolben (6) ein Kanal (15, 16) angeordnet ist, der mit einem Sicherheitsventil (18) versehen ist, wobei ein Ende des Kanals mit einer Druckmittelkammer (7) des hydraulischen Systems verbunden ist, das den Einstellkolben (6) bewegt, um Schmiermittel zu den Auflagerflächen (14) und zwischen die obere Fläche (11) der Zwischenplatte (10) und ihre Gegenfläche (12) zu leiten, wenn der Druck in der Druckmittelkammer (7) einen bestimmten Wert überschreitet.

14. Kegelbrecher nach einem der Ansprüche 7 bis 13, der Rillen für Schmiermittel hat,
**dadurch gekennzeichnet, daß**
die Schmiermittelrillen an den Stahlflächen oder an den Auflagerflächen (12, 14) mit einer entsprechenden Festigkeit hergestellt sind, und die Lagermaterialflächen (11, 13) glatt sind.

## Revendications

1. Combinaison de palier de butée axial (9) d'un arbre principal d'un concasseur giratoire, ladite combinaison de palier de butée comprenant une plaque intermédiaire (10), dont la partie supérieure (11) est une partie d'une surface sphérique convexe ou concave ou d'une surface plane, opposée à une surface inférieure de l'arbre principal (1) ou d'une plaque (12) fixée à l'arbre principal, ladite surface inférieure étant conformée de façon correspondante sous forme d'une partie convexe ou concave d'une surface sphérique ou bien sous forme d'une surface plane, et dont la surface inférieure (13) est opposée à une surface d'appui (14) en dessous de la plaque intermédiaire, grâce à quoi au moins une surface (11, 13) de la plaque intermédiaire est faite d'un matériau d'appui plus mou que l'acier, et la surface opposée (12, 14) contre celle-ci est une surface d'acier ou bien une surface présentant les caractéristiques de résistance correspondantes, **caractérisée en ce que** la partie centrale de la plaque intermédiaire (10), comprenant au moins 50 %, de préférence au moins 70 %, même au moins 99 % du volume de la plaque intermédiaire (10), est faite d'acier ou d'un matériau présentant les caractéristiques de résistance correspondantes, et qu'au moins une surface de celle-ci est plaquée avec une couche de matériau d'appui (11, 13).

2. Combinaison de palier de butée selon la revendication 1, **caractérisée en ce que** le matériau d'appui (11, 13) de la plaque intermédiaire (10) est fait d'un métal antifriction.

3. Combinaison de palier de butée selon la revendication 2, **caractérisée en ce que** le métal antifriction (11, 13) de la plaque intermédiaire (10) est fixé à la partie centrale par explosion.

4. Combinaison de palier de butée selon l'une quelconque des revendications 1 à 3, dans laquelle les surfaces opposées (12, 14) contre la plaque intermédiaire (10) sont des surfaces d'acier ou des surfaces faites d'un matériau présentant la résistance correspondante, **caractérisée en ce qu'**à la fois les surfaces supérieure et inférieure de la plaque intermédiaire (10) sont plaquées avec une couche de matériau d'appui (11, 13).

5. Combinaison de palier de butée selon l'une quelconque des revendications 1 à 4, **caractérisée en ce que** la surface inférieure (13) de la plaque intermédiaire (10) est opposée directement à la surface supérieure du piston d'ajustement du concasseur en dessous de l'arbre principal (1), ou bien à la surface supérieure (14) de la partie inférieure du piston plongeur en forme de coupelle (6) entourant l'extrémité inférieure de l'arbre principal.

6. Combinaison de palier de butée selon l'une quelconque des revendications 1 à 5, dans laquelle les surfaces d'appui comportent des rainures pour lubrifiant, **caractérisée en ce que** les rainures pour lubrifiant sont pratiquées sur des surfaces d'acier ou bien sur les surfaces d'appui (12, 14) présentant une résistance correspondante, et **en ce que** les surfaces de matériau d'appui (11, 13) sont lisses.

7. Concasseur giratoire, comprenant
un châssis (11'),
dans le châssis, un arbre excentrique (4), pouvant tourner autour d'un axe vertical, comportant un trou incliné vertical dans celui-ci,
un arbre principal (1) supporté par des paliers dans le trou de l'arbre excentrique, et comportant une extrémité supérieure s'étendant au-dessus de l'arbre excentrique, un cône de support (2) étant fixé à ladite extrémité supérieure, et une tête de concasseur (3) étant fixée audit cône de support, et
en dessous de l'arbre principal, une combinaison de palier de butée axial (9) comprenant une plaque intermédiaire (10), dont la surface supérieure (11) est une partie d'une surface sphérique concave ou convexe ou bien une surface plane, opposée à l'extrémité inférieure (12) de l'arbre principal conformé de façon correspondante sous forme d'une partie d'une surface sphérique convexe ou concave ou bien sous forme d'une surface plane, grâce à quoi au moins l'une des surfaces (11, 13) de la plaque intermédiaire est faite d'un matériau d'appui plus mou que l'acier, et la surface opposée (12, 14) contre celle-ci est une surface d'acier ou bien une surface faite d'un matériau ayant des caractéristiques de résistance correspondantes,
**caractérisé en ce qu'**une partie centrale, comprenant au moins 50 %, de préférence au moins 70 %, même au moins 99 % du volume de la plaque intermédiaire (10), est faite d'acier ou bien un matériau présentant une résistance correspondante, et qu'au moins l'une des deux surfaces de celle-ci étant plaquée avec une couche d'un matériau d'appui (11, 13).

8. Concasseur giratoire selon la revendication 7, **caractérisé en ce que** le matériau d'appui (11, 13) de la plaque intermédiaire (10) est fait d'un métal antifriction.

9. Concasseur giratoire selon la revendication 8, **caractérisé en ce que** le métal antifriction (11, 13) de la plaque intermédiaire (10) est fixé à la surface de la partie centrale par explosion.

10. Concasseur giratoire selon l'une quelconque des revendications 7 à 9, dans lequel les surfaces opposées (12, 14) contre la plaque intermédiaire (10) sont des surfaces d'acier ou bien des surfaces faites d'un matériau présentant une résistance correspondante, **caractérisé en ce qu'**à la fois les surfaces supérieure et inférieure de la plaque intermédiaire (10) sont plaquées avec une couche d'un matériau d'appui (11, 13).

11. Concasseur giratoire selon l'une quelconque des revendications 7 à 10, **caractérisé en ce que** la surface inférieure (13) de la plaque intermédiaire (10) est opposée directement à la surface supérieure du piston d'ajustement du concasseur en dessous de l'arbre principal (1), ou bien à la surface supérieure (14) de la partie inférieure du piston plongeur en forme de coupelle (6) agissant en tant que piston d'ajustement et entourant l'extrémité inférieure de l'arbre principal.

12. Concasseur giratoire selon l'une quelconque des revendications 7 à 11, **caractérisé en ce que** dans le piston (6), il existe un canal (15, 16) muni d'une soupape de sûreté (18), une extrémité dudit canal débouchant dans un espace de milieu sous pression (7) du système hydraulique déplaçant le piston d'ajustement (6) en vue d'amener le lubrifiant vers un espace pour lubrifiant (17), lorsque la pression de l'espace du milieu sous pression (7) dépasse une certaine valeur.

13. Concasseur giratoire selon l'une quelconque des revendications 7 à 12, **caractérisé en ce que** dans le piston (6), il existe un canal (15, 16) muni d'une soupape de sûreté (18), une extrémité dudit canal débouchant dans un espace de milieu sous pression (7) du système hydraulique déplaçant le piston d'ajustement (6) en vue d'amener le lubrifiant vers la surface d'appui (14) et entre la surface supérieure (11) de la plaque intermédiaire (10) et sa surface opposée (12), lorsque la pression de l'espace du milieu sous pression (7) dépasse une certaine valeur.

14. Concasseur giratoire selon l'une quelconque des revendications 7 à 13, comportant des rainures pour lubrifiant, **caractérisé en ce que** les rainures pour lubrifiant sont pratiquées dans des surfaces d'acier ou bien dans les surfaces d'appui (12, 14) présentant une résistance correspondante, et les surfaces de matériau d'appui (11, 13) sont lisses.
